# EUROPEAN PATENT SPECIFICATION

(11) **EP 2 215 788 B1**
(45) Date of publication and mention of the grant of the patent: **22.02.2012**
(21) Application number: 08839200.6
(22) Date of filing: 15.10.2008
(51) Int. Cl.: H04L 12/58, G06Q 30/00

(54) **SYSTEM, METHOD AND COMPUTER PROGRAM FOR MODIFYING COMMUNICATIONS**
SYSTEM, VERFAHREN UND COMPUTERPROGRAMM ZUR KOMMUNIKATIONSÄNDERUNG
SYSTÈME, PROCÉDÉ ET PROGRAMME D'ORDINATEUR DESTINÉS À MODIFIER DES COMMUNICATIONS

(30) Priority: 15.10.2007 US 999004 P; 25.02.2008 GB 0803273
(43) Date of publication of application: 11.08.2010
(73) Proprietor: Apple Inc., Cupertino, CA 95014 (US)
(72) Inventor: MORLEY, Geoff, London, Greater London SW15 2JT (GB); KIRLEY, Mark, Winchester Hampshire SO21 1RN (GB)
(74) Representative: Barton, Russell Glen
(86) International application number: PCT/EP2008/063839
(87) International publication number: WO 2009/050181

(56) References cited:
- EP-A- 1 542 482
- EP-A- 1 677 475
- WO-A-01/22748
- WO-A-02/054803
- WO-A-2004/100470
- WO-A-2004/104867
- US-A1- 2003 188 017
- US-A1- 2007 088 851

## Description

### Field of the Invention

The present invention relates generally to systems, methods and computer programs to select digital information, such as multimedia objects, alphanumeric information or links to deliver to individuals' communications devices.

### Background Information

Peer-to-peer and peer-to-group communications, such as Short Message Service (SMS), Multimedia Message Service (MMS), EMS (Enhanced Message Service), e-mail and Instant Messaging (IM), are being used more frequently as a mechanism for delivering advertisements. The term "tagging" is generally used when describing this type of advertising, i.e., a tag is an advertisement which is delivered to users' communication devices using any of the foregoing techniques. The term *Tag* refers to information added by a service operator, such as MVNO (mobile virtual network operator), MNO (mobile network operator), other 3^{rd} party or a sender (e.g. using a suitable application in a sending device to a peer-to-peer, peer-to-group, service-to-peer or service-to-group digital message). The information contained within the *Tag* could be at least one of the following: part of an advertisement campaign, a service acquisition message, and information services (news stories, weather, 'What's On', etc.), or any other content. US2007/088851A1, EP1542482A, EP1677475A, WO01/22748A, WO02/054803A and WO2004/100470A describe various methods for tagging messages.

In particular, the SMS is a universal standard that allows the users of cellular telephones, cable telephones, or other communication devices which support it, to send and receive messages with a text content that can comprise a predetermined maximum number of alphanumerical characters.

In the alphabetical coding system of the European standard GSM, the maximum number of characters is 160, in the Cyrillic standard the maximum number of characters is 140, and with the UCS2 (Turkish, Greek, Arab, Chinese, Thai, etc. ) standard the maximum number of characters is 70.

The evolution of SMS has led to EMS, for incorporating in a SMS text message graphics, images, animations and/or sounds.

In this context SMART MESSAGE (SM) is also used, which is a standard developed by Nokia Corporation and universally recognized. SM enables the addition graphical, audio and video content to normal SMS text messages.

Both the SMART MESSAGE and the EMS standards are made linking several SMS to one another.

A Flash Message, also called SMS of class 0, is a special text message, improved from the SMS message. Its content is displayed directly on the display of the mobile phone.

The MMS (Multimedia Messaging Service) is a universal standard that enables the users of mobile phones and other communication devices that support it to send and receive messages with content of text, images, graphics, sounds, audio clips and/or video clips. The structure of the MMS consists of one or more pages or "slides", each containing two regions, one for the text and one for the images. The pages, furthermore, can be timed, and sound can be appended, and they can be displayed. Each page, or slide, has the same layout. The MMS is therefore an extension of the concept of SMS, are MMS messages are typically called multimedia messages.

Concerning SMS, the cost of the messages is typically independent of the length of the text being sent, which only seldom achieves the maximum allowed. Therefore, the user incurs the same cost for a single word as for a long text within the limits. The same applies for a Mobile Virtual Network Operator (MVNO), i.e. MVNO typically pays to Mobile Network Operator (MNO) the same fee per message independent of the length of the text as delivered for MVNO's client. To clarify, a MVNO is a company that provides mobile (sometimes called wireless or cellular) telephone service but does not have its own allocation of the radio frequency spectrum nor all of the infrastructure required to provide mobile telephone service.

The same occurs for other types of the above cited messages, EMS, SMART MESSAGE and MMS, where the cost of the sent message is typically

fixed, or calculated for blocks of fixed length, or calculated as packages of delivered data. Therefore, except for rare cases, messages contain a residual portion with no message content.

The use of unused space within digital communications for advertising use creates a substantial inventory of available (that is, unused) tag portion and thus requires a substantial inventory of tags to be used to fill these available tag portions. Efficient use of this tag inventory with a varied supply of commercially viable tags can be problematic. For SMS tags alone, it is estimated that for every 100,000 mobile users, there are more than 2,000,000 tag portions available every month. Accordingly, it is a primary concern of mobile operators and advertisers to deliver tags to the users of the service that are relevant, engaging and timely.

To this end, "House Ads" are frequently used by mobile operators and are a set of advertisements that promote the mobile operator itself. However, the mobile operator is then unable to directly obtain revenue from the advertisements, tags, links as would occur if a party other than the mobile operator were utilizing this unused available portion.

### Summary of the Invention

In accordance with at least one embodiment of the invention, methods, systems and software are provided for supporting or implementing functionality to modify messages that are transmitted to a user of a mobile terminal via a communications network, as specified in the independent claims. This is achieved by a combination of features recited in each independent claim. Accordingly, dependent claims prescribe further detailed implementations of the present invention.

The present invention enables messages to be modified so as to include links that are thereafter delivered to individuals' communication devices in conjunction with an already-transmitted message. The content is selected by determining relevant and/or recent web page links that may be used as tags when modifying a message, such as SMS or MMS message, being delivered to each user's communication device. In the case of links to web pages, the search for relevant and/or recent links is tailored to the users who are sending/receiving the message and is designed to consider the resource usage requirements associated with content that is available from different Internet service providers.

Embodiments are particularly well suited to the current state of web based services, where typically any given content can be sourced from various Internet service providers, each of which presents the content in a different manner, and thus has commensurately different resource usage requirements. For example, a given news story S sourced from provider A can require a bit rate of X, while the same news story S sourced from provider B can require a bit rate of Y, with Y being greater than X. With embodiments of the invention, information relating to story S can reach recipients from either providers A, B, and the selection is performed on the basis of the differences between the magnitudes of X and Y. Embodiments thus provide a means of using available network resources as efficiently as possible.

Message modification can additionally be performed on the basis of the suitability of a site to mobile internet access generally or device capability or rate agreement of sender or receiver of the message and the current popularity of a mobile internet site (for instance, an information provider while a major news story is breaking).

### Brief Description of the Drawings

The invention, together with further objects and advantages thereof, may best be understood by reference to the following description taken in conjunction with the accompanying drawings, wherein like reference numerals identify like elements, and wherein:
Figure 1 is a schematic illustration of a communications network arranged in accordance with an embodiment of the invention;
Figure 2 is a flow chart showing the manner in which the system and method in accordance with the invention fill unused inventory of allocatable tag portions in messages being delivered to communication devices; and
Figure 3 is a flow chart showing an example of how the system and method in accordance with the invention function.

### Detailed Description

Embodiments of the invention are concerned with modification of data messages en route for a recipient. Specifically, embodiments are concerned with modifying a message so as to supplement the original content of a message with data from web sites; selection of the supplementing data is based on resource usage requirements associated therewith. The nature of this modification, and the criteria used to make the modification, will be described in detail later in the description, but first a description of the infrastructure needed to support the modification will be presented.

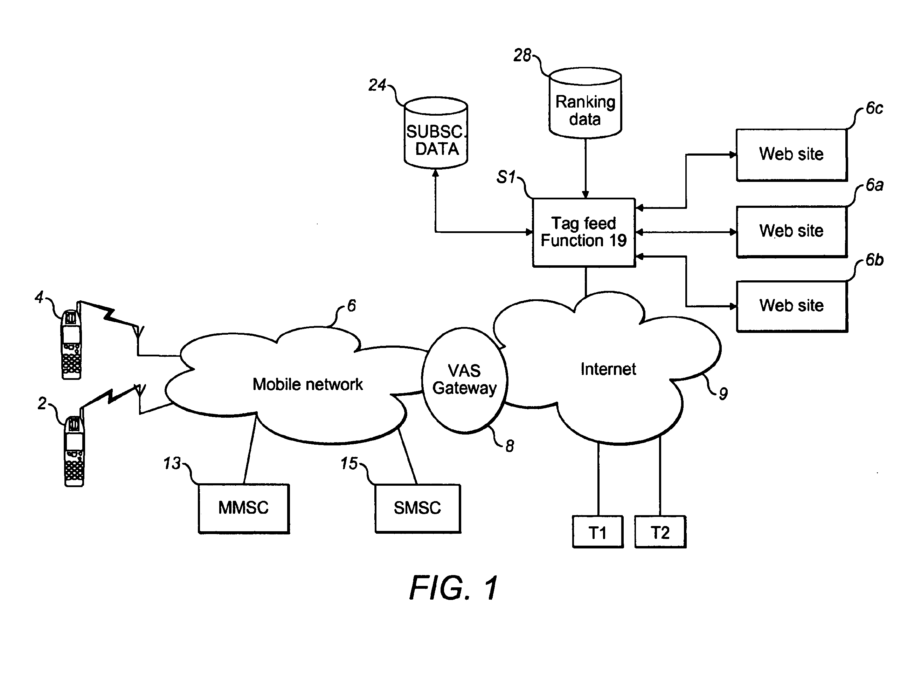

Referring to the accompanying drawings wherein the same reference numerals refer to the same or similar elements, Figure 1 provides an example of a data messaging system 1 within which embodiments of a first aspect of the invention operate and shows examples of various networks through which the messages can be transmitted and modified. In the current embodiment the distributed information system 1 comprises a plurality of web sites 6a, 6b, 6c, at least some of which can be arranged to transmit content data to terminals such as terminals 2, 4 over the Internet 9, and from which data items can be retrieved by terminals 2, 4 over the Internet 9. The data messaging system 1 also includes a server S1 arranged to execute a tag feed function 19, which accesses either an inventory of information derived from web sites (e.g. as part of a batch process), or the web sites 6a, 6b, 6c themselves in real time. In either arrangement, the tag feed function 19 queries the web sites 6a, 6b, 6c on the basis of a message modification requirement and profile information associated with the recipient and/or sender of a message to be modified.

The mobile terminals 2, 4 can be adapted to communicate with the various web servers 6a, 6b, 6c via mobile network 6 and an appropriate gateway GW 8, as shown; the terminals 2, 4 can be mobile telephones or personal Digital Assistants (PDAs), laptop computers and the like, and the mobile network 6 can comprise a licensed network portion (such as is provided by cellular networks using e.g. Global System for Mobile Communications (GSM) technology, Wideband Code Division Multiplex Access (WCDMA); Code Division Multiplex Access (CDMA), WiMax) and/or unlicensed network portions (such as is provided by Wireless LANs and Bluetooth technologies). The gateway GW can be a GPRS support node (GGSN) forming part of the mobile network 6.

The mobile terminals 2, 4 can comprise browser and/or bespoke client programs adapted to locate, and access data from, web sites accessible via the public network 9. The browser programs allow users of the terminals 2, 4 to enter addresses of specific web sites, typically in the form of Uniform Resource Locators, or URLs, and are typically adapted to receive and display web and WAP pages; in the event that a given terminal 2 is only capable of processing and displaying WAP pages, translation of a web page can be performed by a device in the network or by suitable translation software running on the device 2. As is known in the art, any given web page can include links nested therein, which, when selected, can provide access to other pages or data such as plain textual information, or digitally encoded multimedia content, such as software programs, audio signals, videos graphics, etc. Accordingly selection of such links results in transmission of further data to the terminals 2, 4. The client applications and programs can be used to display, modify, access and use data from various information sources such as map databases, e-mail services, video and audio services etc.

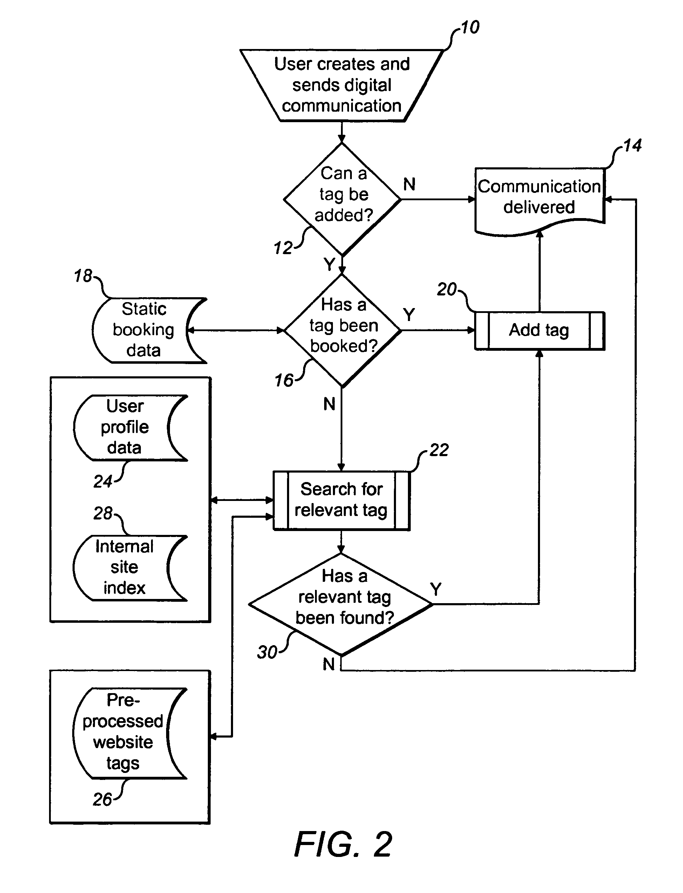

Figure 2 is a flow chart showing the manner in which the system and method in accordance with some embodiments of the invention are used to supplement unused portions within messages being delivered to communication devices. In a first step, 10, is for a user to create and send a digital communication, e.g., a message such as a SMS message, to another user's communication device. Then, this communication is analyzed to determine whether it can be modified to include a tag, or otherwise have a tag associated therewith (step 12). The analysis of the digital communication to determine whether the message can be modified to include additional information such as advertisements, tags or links and how the modification can be implemented is disclosed in International patent application having publication number WO2004/100470 entitled Messaging System and Service. If not, then the communication is delivered to the user's device without modification, i.e., without an associated tag. However, if the message is determined to allow for inclusion or insertion of a tag, then a determination is made as to whether there is a tag in the repository of tags (step 16), e.g., tags from advertisers who have paid to have tags delivered to individuals. This stage is performed by communicating with a database containing tag booking data (step 18). If there is an available and relevant tag, then one of the tags from the repository is placed within the communication 20 and the communication is delivered to the individual's communication device (step 14). Selection of a particular tag to place within the communication may be based on the profile of the individual, the content of the communication, and other known parameters for targeting advertisements to individuals.

If there are no tags in the repository, which is usually indicative of insufficient tags having been received for the allocatable portions for the individuals for a given period of time, then a tag feed function is invoked to search for one or more links to include within or otherwise associate with the communication 22.

According to one embodiment of the invention, the system can include an inventory 26 of tags comprising data derived from a web site, and there may be as many logical inventories as there are Internet service providers from which web content can be derived. Since the content of web sites changes over time (this is particularly the case in relation to web sites containing news feeds and the like), this embodiment enables selection of dynamic tags with factual content. The search through respective inventories of web-related tags is performed on the basis of, for example, profile information available concerning the recipient of the communication (possibly contained in one or more user profile databases 24), or profile information concerning the sender of the communication, especially if no information (no profile data) is available concerning the recipient but such profile information exists concerning the sender (also possibly contained in database 24), information relating to the communication to be tagged (e.g. amount of free space in a message) and the resource usage requirements of the tags that match the profile data. Resource usage requirements include size of the tag, both in terms of the number of characters making up the tag and the number of Bytes associated with the tag to be added to an existing communication, number of links to other web sites within the tag, and suitability of a web site to mobile internet access generally etc. In cases where the tag comprises a URL link to a web site, the resource usage requirements can additionally factor in the amount of data that will be downloaded to the mobile terminal when the link is selected. The selection of a respective inventory may additionally be dependent on data transfer rates agreed between operators of a mobile communications network and the respective Internet service providers. In addition, selection of tags can be dependent on the current popularity of a mobile internet site with which the tags are associated, possibly determined from an internet site index 28.

It should be noted that a tag is not always something that has been booked into an inventory as such, and that it can correspond to a relevant website, (e.g. a web page having news about a celebrity buying a new dog) from which data is selected so as to form a tag. In this instance a tag is created in real time, either by creating a link to the site with short description of the link/site or by selecting a portion of data from the web site to insert into the communication. Once relevant information such as an advertisement, link or tag has been found it is inserted within the communication (step 30) to fill the tag portion fully or partly and the communication is delivered (step 14).

User profile information may be generated from, for example, preferences (information, likes/dislikes and interests) provided by the user, information regarding purchases made by the user when using the communication system, internet searches conducted when using the communication system, subjects of and information conveyed when sending text messages and emails when using the communication system, and previous advertisements, tags, and/or messages sent from the communication service provider that the user has/has not responded to, among others.

An example of the tagging process according to an embodiment of the invention will now be described, in respect of an SMS communication comprising the text "Going out tonight?" sent from user A of a mobile communications device to user B of another mobile communications device. The SMS communication comprises an unused portion, that is to say the message from A to B does not occupy all of the space available in the SMS message. Accordingly, and as a first step, a tag is sought from the regular, non-web specific tag repository. However, the repository is empty, i.e., there are no more tags to place within the message, or there are no more relevant tags, i.e., although there are still tags in the tag inventory, none of them are deemed relevant to mobile User B. The tagging service recognizes this and invokes a tag feed function, triggering a search on available internet sites, e.g., mobile internet sites, initially attempting to use profiling information known about the intended recipient of the message (User B). However, in this particular example, the profile of the recipient is not accessible, so a search is made on the basis of profile information associated with the sender (User A).

Profiling information about User A, from user profile database 24, indicates that the user is an avid sports fan with a history of specific interest in the Manchester United soccer club. A mobile internet search is made based using this information. The search results identify over 200 references, e.g., links, that may be used. However, one result that is particularly popular is a link to an internet site S1 having a breaking news story that a new player is about to sign with the club (this information being available in the internet site index 28). Coincidentally, the service provider associated with this particular mobile internet site S1 has an agreement with the mobile operator of the communications network associated with user B whereby content sold to their users is subject to special rates. Another web site S2 has a news story relating to recent signings at Manchester United, albeit not including this new information. The tag feed function assesses the available space in the message against the sizes of links to these web sites S1, S2, together with the respective rates for data delivery, in order to determine which of the two to select. As a result of these considerations the search engine determines that the link to site S1 is to be inserted into the unused tag portion, and then proceeds to enable delivery of the SMS message from User A to User B with this link.

It will be appreciated that in relation to a URL, the minimum size requirements relate to the characters defining the link, and that further, supporting, text and images are optional. It may be the case that the number of characters making up the link exceeds the available space, in which case the content of the web site could be copied to a proxy web site having a shorter path, and this shorter path be included in the communication that user B receives

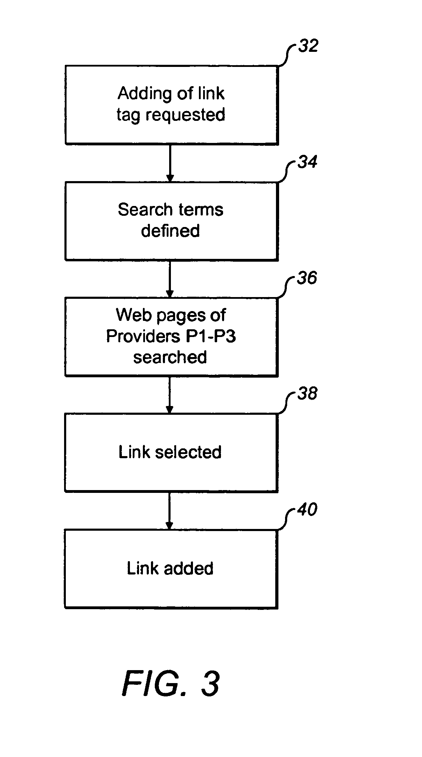

With reference to Figure 3, in another example, a message tagging service has agreements with news/blog/rumor providers P1, P2 and P3 that links to their web page will be added to a message as a tag. The agreement may contain a basic fee for adding a link and another rate for including a click-through link, each optionally being additionally dependent on the amount of data that will be accessed when the recipient selects the link. The agreement may additionally contain sets of rates, each of which is a function of a given mobile network operator. When User A sends a SMS to User B, as for the first example, the tag feed function is invoked, and the addition of a link tag is requested (step 32). During this tagging process, a search tool is provided with defined search terms (step 34 (e.g. based on profile information of the sender or receiver or based on content of the message)) and used to search Internet sites (preferably mobile internet sites) of providers P1, P2 and P3 to find the most recent and/or most relevant news or story and a link to the selected provider's site is attached as a tag (step 36). Relevancy may be based on information about the sender, the receiver, the content of a message, size of unused portion of the message and/or the rate agreed with a provider. This embodiment could be used when links are added as tags, i.e., to replace static links with "dynamic links" which are selected based on search and relevancy of the search result. Once a link is selected at step 38, it is added to the message at step 40.

A computer program, or a suite of computer programs, running on a network server, a gateway or a store-and-forward node connected to the Internet may be arranged to perform all of the steps shown in Figures 1 and 2. For example, a computer program may be designed to monitor communications to determine whether a tag can be inserted, whether a tag has been booked, whether the size of the unused portion of the message permits the addition of a tag and what the size of the tag can be, search for a relevant tag, determine whether a relevant tag has been found, add the tag and continue with or enable the delivery of the modified communication. This program could interact with the tag booking data which may be maintained in a database operated or managed by an advertisement management system operator or the mobile service operator. The program would also interact with the various databases and indexes which provide data about the recipient and/or sender of the communication, data about commercial relationships which may affect the determination of links to include in communications and data about popularity of internet sites.

This computer program may be resident on computer-readable media. Computer-readable medium could be any means that can contain, store, communicate, propagate or transmit a program for use by or in connection with the method, system, apparatus or device. The computer-readable medium can be, but is not limited to (not an exhaustive list), electronic, magnetic, optical, electromagnetic, infrared, or semi-conductor propagation medium. The medium can also be (not an exhaustive list) an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM). The medium can also be paper or other suitable medium upon which a program is printed, as the program can be electronically captured, via for example, optical scanning of the paper or other medium, then compiled, interpreted, or otherwise processed in a suitable manner, if necessary, and then stored in a computer memory. Also, a computer program or data may be transferred to another computer-readable medium by any suitable process such as by scanning the computer-readable medium.

Having described exemplary embodiments of the invention with reference to the accompanying drawings, it will be appreciated that the present invention is not limited to those embodiments, and that various changes and modifications can be effected therein by one of ordinary skill in the art without departing from the scope of the invention.

## Claims

1. A method of modifying a message sent through a data communications network (6), the message including transmission data identifying one or more destinations (2, 4) of said message and a message body, the data communications network having access to a plurality of Internet service providers (6a-c), each said internet service provider being associated with one or more content sources, each said content source having one or more defined characteristics for use in selecting content therefrom, the method including:
monitoring communications (12) transmitted to a recipient communication device associated with at least one said destination to identify a message with which content can be associated;
in response to identifying a said message, selecting one of said Internet service providers (26) on the basis of a said characteristic relating to resource usage requirements associated with content available from respective content sources; and
modifying said message body (20) so as to include a link facilitating access to said content associated with the selected internet service provider therein, for further transmission of said modified message through the data communications network to the recipient communication device.

2. The method of claim 1, including analyzing the transmission data relating to the recipient or a sender of the communication (24).

3. The method of claim 2, comprising analyzing the transmission data relating to the recipient if available and only if data relating to the recipient is unavailable, then analyzing data relating to the sender.

4. The method of claim 3, wherein the step of analyzing data relating to the recipient or the sender of the communication comprises searching at least one user profile database containing data associated with the recipient or sender of the communication.

5. The method of claim 4, comprising analyzing said profile data and searching the content sources associated with respective Internet service providers for a relevant link to an Internet site based on the profile data and said characteristics of the content.

6. The method of any one of the preceding claims, comprising analyzing data relating to a relationship between the operator managing communications to the device and the Internet service providers, whereby to select said Internet service provider.

7. The method of claim 6, including reviewing resource usage rates associated with respective Internet service providers.

8. The method of claim 7, wherein the resource usage rates comprise data relating to a rate for selection of content by the Internet service provider.

9. The method of any one of the preceding claims, wherein the link comprises a Uniform Resource Locator.

10. A network system (1) arranged to store a data message, the data message comprising transmission data identifying at least one recipient communication device (2, 4) of said data message and a message body, the network system having access to a plurality of Internet service providers (6a-c), each said internet service provider being associated with one or more content sources, each said content source having one or more defined characteristics for use in selecting content therefrom, the network system comprising:
a message monitoring component arranged to monitor communications transmitted to a recipient communication device associated with at least one said destination to identify a message with which content can be associated;
a content selection system (19) arranged to select one of said Internet service providers on the basis of a said characteristic relating to resource usage requirements associated with content available from respective content sources; and
a message modifier, arranged, in response to receiving a said communication, to modify said message body so as to include a link facilitating access to said content associated with a selected internet service provider therein, for further transmission of said modified message through the data communications network to the recipient communication device.

11. The system of claim 10, further comprising at least one user profile database (24) containing data relating to said recipient or a sender of the communication, the network system further comprising analyzing means arranged to access the at least one user profile database so as to retrieve characteristics associated with said recipient and/or sender.

12. The system of claim 11, wherein the content selection system is further arranged to search the content sources associated with respective Internet service providers based on the retrieved profile data and said characteristics of the content, so as to retrieve said content associated with a selected internet service provider.

13. The system of any one of claim 10 to claim 12, further comprising a service provider database arranged to store data relating to a relationship between the operator managing communications to the device and the Internet service providers, said stored data including resource usage rates associated with respective Internet service providers.

14. The system of claim 13, wherein the resource usage rates comprise data relating to a rate for selection of content by the Internet service provider.

15. The system of any one of claim 10 to claim 14, wherein the link comprises a Uniform Resource Locator.

## Patentansprüche

1. Verfahren zum Modifizieren einer Mitteilung, die durch ein Datenkommunikationsnetzwerk (6) gesendet wird, wobei die Mitteilung Übertragungsdaten umfasst, die ein oder mehrere Ziele (2, 4) der Mitteilung angeben, und einen Mitteilungskörper, wobei das Datenkommunikationsnetzwerk Zugriff auf eine Mehrzahl von Internetdienstanbietern (6a-c) hat, wobei jeder Internetdienstanbieter mit einer oder mehreren Inhaltsquellen assoziiert ist, wobei jede der Inhaltsquellen eine oder mehrere definierte Eigenschaften zu Verwendung hat beim Auswählen von Inhalt davon, wobei das Verfahren umfasst:
Überwachen von Kommunikationen (12), die an eine Empfängerkommunikationsvorrichtung übertragen werden, die mit zumindest dem Ziel assoziiert ist, um eine Mitteilung zu identifizieren, mit welcher Inhalt assoziiert werden kann;
In Antwort auf das Identifizieren einer solchen Mitteilung, Auswählen eines der Internetdienstanbietern (26) auf der Basis einer solchen Eigenschaft, die sich auf Betriebsmittelverwendungsbedingungen bezieht, die mit Inhalt assoziiert sind, der von jeweiligen Inhaltsquellen verfügbar ist; und
Modifizieren des Mitteilungskörpers (20), um eine Verbindung zu umfassen, die Zugriff auf den Inhalt ermöglicht, der mit dem darin ausgewählten Internetdienstanbieter assoziiert ist, zur weiteren Übertragung der modifizierten Mitteilung durch das Datenkommunikationsnetzwerk an die Empfängerkommunikationsvorrichtung.

2. Verfahren nach Anspruch 1, umfassend ein Analysieren der Übertragungsdaten, die sich auf den Empfänger oder einen Sender der Kommunikation (24) beziehen.

3. Verfahren nach Anspruch 2, umfassend ein Analysieren der Übertragungsdaten, die sich auf den Empfänger beziehen, falls verfügbar und nur wenn Daten, die sich auf den Empfänger beziehen, nicht verfügbar sind, dann Analysieren von Daten, die sich auf den Sender beziehen.

4. Verfahren nach Anspruch 3, wobei der Schritt des Analysierens von Daten, die sich auf den Empfänger oder den Sender der Kommunikation beziehen, ein Durchsuchen von zumindest einer Benutzerprofildatenbank umfasst, die Daten umfasst, die mit dem Empfänger oder Sender der Kommunikation assoziiert sind.

5. Verfahren nach Anspruch 4, umfassend ein Analysieren der Profildaten und Durchsuchen von Inhaltsquellen, die mit jeweiligen Internetdienstanbietern assoziiert sind, nach einer relevanten Verknüpfung zu einer Internetseite basierend auf den Profildaten und den Eigenschaften des Inhalts.

6. Verfahren nach irgendeinem der vorhergehenden Ansprüche, umfassend ein Analysieren von Daten, die sich auf eine Verbindung zwischen dem Betreiber, der Kommunikationen zu der Vorrichtung verwaltet, und den Internetdienstanbietern, wobei der Internetdienstanbieter auszuwählen ist.

7. Verfahren nach Anspruch 6, umfassend Überprüfen von Betriebsmittelverwendungsraten, die mit jeweiligen Internetdienstanbietern assoziiert sind.

8. Verfahren nach Anspruch 7, wobei die Betriebsmittelverwendungsraten Daten umfassen, die sich auf eine Rate zur Auswahl von Inhalt durch den Internetdienstanbieter beziehen.

9. Verfahren nach irgendeinem der vorhergehenden Ansprüche, wobei die Verbindung einen Uniform Resource Locator umfasst.

10. Netzwerksystem (1), das dazu eingerichtet ist, eine Datenmitteilung zu speichern, wobei die Datenmitteilung Übertragungsdaten umfasst, die zumindest eine Empfängerkommunikationsvorrichtung (2, 4) der Datenmitteilung identifizieren, und einen Mitteilungskörper, wobei das Netzwerksystem Zugriff auf eine Mehrzahl von Internetdienstanbietern (6a-c) hat, wobei jeder der Internetdienstanbieter mit einer oder mehreren Inhaltsquellen assoziiert ist, wobei jede der Inhaltsquellen eine oder mehrere definierte Eigenschaften zur Verwendung beim Auswählen von Inhalt davon hat, wobei das Netzwerksystem umfasst:
Eine Mitteilungsüberwachungskomponente, die dazu eingerichtet ist, Kommunikationen zu überwachen, die an eine Empfängerkommunikationsvorrichtung übertragen werden, die mit zumindest dem Ziel assoziiert sind, um eine Mitteilung zu identifizieren, mit der Inhalt assoziiert werden kann;
Ein Inhaltsauswahlsystem (19), das dazu eingerichtet ist, um einen der Internetdienstanbieter zu wählen auf der Basis einer solchen Eigenschaft, die sich auf Betriebsmittelverwendungsbedingungen bezieht, die mit Inhalt assoziiert sind, der von jeweiligen Inhaltsquellen verfügbar ist;
und
Einen Mitteilungsmodifizierer, der dazu eingerichtet ist, in Antwort auf das Empfangen einer solchen Kommunikation, den Mitteilungskörper zu modifizieren, um eine Verbindung zu umfassen, die Zugriff auf den Inhalt ermöglicht, der mit einem ausgewählten Internetdienstanbieter darin assoziiert ist, zur weiteren Übertragung der modifizierten Mitteilung durch das Datenkommunikationsnetzwerk an die Empfängerkommunikationsvorrichtung.

11. System nach Anspruch 10, weiterhin umfassend zumindest eine Benutzerprofildatenbank (24), die Daten umfasst, die sich auf den Empfänger oder einen Sender der Kommunikation beziehen, wobei das Netzwerksystem weiter Analysemittel umfasst, die dazu eingerichtet sind, auf zumindest eine Benutzerprofildatenbank zuzugreifen, um Eigenschaften abzurufen, die mit dem Empfänger und/oder Sender assoziiert sind.

12. System nach Anspruch 11, wobei das Inhaltsauswahlsystem weiter dazu eingerichtet ist die Inhaltsquellen zu durchsuchen, die mit jeweiligen Internetdienstanbietern assoziiert sind basierend auf den abgerufenen Profildaten und den Eigenschaften des Inhalts, um den Inhalt abzurufen, der mit einem ausgewählten Internetdienstanbieter assoziiert ist.

13. System nach irgendeinem der Ansprüche 10 bis 12, weiter umfassend eine Dienstanbieterdatenbank, die dazu eingerichtet ist, Daten zu speichern, die sich auf eine Verbindung zwischen dem Betreiber, der Kommunikationen zu der Vorrichtung verwaltet, und den Internetdienstanbietern bezieht, wobei die gespeicherten Daten Betriebsmittelverwendungsraten umfassen, die mit jeweiligen Internetdienstanbietern assoziiert sind.

14. System nach Anspruch 13, wobei die Betriebsmittelverwendungsraten Daten umfassen, die sich auf eine Rate zur Auswahl von Inhalt durch den Internetdienstanbieter beziehen.

15. System nach irgendeinem der Ansprüche 10 bis 14, wobei die Verbindung einen Uniform Resource Locator umfasst.

## Revendications

1. Procédé de modification d'un message envoyé sur un réseau de communication de données (6), le message contenant des données de transmission identifiant une ou plusieurs destinations (2, 4) dudit message et un corps de message, le réseau de communication de données ayant accès à une pluralité de fournisseurs de services Internet (6a-c), chacun desdits fournisseurs de services Internet étant associé à une ou plusieurs sources de contenu, chacune des sources de contenu ayant une ou plusieurs caractéristiques définies pouvant être utilisées pour la sélection de contenu à partir de ces sources, le procédé comprenant les étapes consistant à :
surveiller les communications (12) transmises à un dispositif de communication destinataire associé à au moins l'une desdites destinations pour identifier un message auquel du contenu peut être associé ;
en réponse à l'identification d'un tel message, sélectionner l'un desdits fournisseurs de services Internet (26) en fonction de l'une desdites caractéristiques relative à des besoins en utilisation de ressources associés à du contenu disponible auprès de sources de contenu respectives ; et
modifier le corps de message (20) de façon à y inclure un lien facilitant l'accès audit contenu associé au fournisseur de services Internet sélectionné, pour la retransmission dudit message modifié au dispositif de communication destinataire, sur le réseau de communication de données.

2. Procédé selon la revendication 1, comprenant une étape consistant à analyser les données de transmission relatives au destinataire ou à un émetteur de la communication (24).

3. Procédé selon la revendication 2, comprenant une étape consistant à analyser les données de transmission relatives au destinataire, si elles sont disponibles, et, uniquement si les données concernant le destinataire ne sont pas disponibles, à analyser alors les données concernant l'émetteur.

4. Procédé selon la revendication 3, dans lequel l'étape d'analyse de données relatives au destinataire ou à l'émetteur de la communication comprend l'opération consistant à rechercher dans au moins une base de données de profils d'utilisateurs contenant des données associées au destinataire ou à l'émetteur de la communication.

5. Procédé selon la revendication 4, comprenant une étape consistant à analyser lesdites données de profil et à rechercher dans les sources de contenu associées à des fournisseurs de services Internet respectifs pour trouver un lien pertinent vers un site Internet en fonction des données de profil et desdites caractéristiques du contenu.

6. Procédé selon l'une quelconque des revendications précédentes, comprenant une étape consistant à analyser des données relatives à une relation entre l'opérateur gérant les communications à destination du dispositif et des fournisseurs de services Internet, pour ainsi sélectionner ledit fournisseur de services Internet.

7. Procédé selon la revendication 6, comprenant une étape consistant à passer en revue les fréquences d'utilisation des ressources associées à des fournisseurs de services Internet respectifs.

8. Procédé selon la revendication 7, dans lequel les fréquences d'utilisation des ressources comprennent des données relatives à une fréquence de sélection de contenu par le fournisseur de services Internet.

9. Procédé selon l'une quelconque des revendications précédentes, dans lequel le lien comprend une adresse URL.

10. Système de réseau (1) conçu pour stocker un message de données, le message de données comprenant des données de transmission identifiant au moins un dispositif de communication destinataire (2, 4) dudit message de données et un corps de message, le système de réseau ayant accès à une pluralité de fournisseurs de services Internet (6a-c), chacun desdits fournisseurs de services Internet étant associé à une ou plusieurs sources de contenu, chacune des sources de contenu ayant une ou plusieurs caractéristiques définies pouvant être utilisées pour la sélection de contenu à partir de ces sources, le système de réseau comprenant :
un composant de surveillance de message conçu pour surveiller les communications transmises à un dispositif de communication destinataire associé à au moins l'une desdites destinations pour identifier un message auquel du contenu peut être associé ;
un système de sélection de contenu (19) conçu pour sélectionner l'un desdits fournisseurs de services Internet en fonction de l'une desdites caractéristiques relative à des besoins en utilisation de ressources associés à du contenu disponible auprès de sources de contenu respectives ; et
un modificateur de message conçu pour, en réponse à la réception de ladite communication, modifier ledit corps de message de façon à y inclure un lien facilitant l'accès audit contenu associé à un fournisseur de services Internet sélectionné, pour la retransmission dudit message modifié au dispositif de communication destinataire, sur le réseau de communication de données.

11. Système selon la revendication 10, comprenant en outre au moins une base de données de profils d'utilisateurs (24) contenant des données relatives audit destinataire ou à un émetteur de la communication, le système de réseau comprenant en outre des moyens d'analyse conçus pour accéder à l'au moins une base de données de profils d'utilisateurs de façon à récupérer des caractéristiques associées audit destinataire et/ou émetteur.

12. Système selon la revendication 11, dans lequel le système de sélection de contenu est en outre conçu pour rechercher dans les sources de contenu associées à des fournisseurs de services Internet respectifs en fonction des données de profil récupérées et desdites caractéristiques du contenu, de façon à récupérer ledit contenu associé à un fournisseur de services Internet sélectionné.

13. Système selon l'une quelconque des revendications 10 à 12, comprenant en outre une base de données de fournisseurs de services conçue pour stocker des données relatives à une relation entre l'opérateur gérant les communications à destination du dispositif et des fournisseurs de services Internet, lesdites données stockées comprenant des fréquences d'utilisation des ressources associées à des fournisseurs de services Internet respectifs.

14. Système selon la revendication 13, dans lequel les fréquences d'utilisation des ressources comprennent des données relatives à une fréquence de sélection de contenu par le fournisseur de services Internet.

15. Système selon l'une quelconque des revendications 10 à 14, dans lequel le lien comprend une adresse URL.
